(19)

Europäisches
Patentamt
European
Patent Office
Office européen
des brevets

(11) **EP 2 597 794 A1**

(12) **EUROPEAN PATENT APPLICATION**

(43) Date of publication:
**29.05.2013 Bulletin 2013/22**

(51) Int Cl.:
**H04B 17/00** *(2006.01)*    **H04B 7/04** *(2006.01)*

(21) Application number: **11306544.5**

(22) Date of filing: **23.11.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Sequans Communications
92800 Puteaux (FR)**

(72) Inventor: **Rollet, Mathieu
92700 Colombes (FR)**

(74) Representative: **Le Saux, Gaël
Cabinet Vidon
Technopole Atalante
16B, rue de Jouanet
35703 Rennes Cedex 7 (FR)**

Remarks:
Amended claims in accordance with Rule 137(2)
EPC.

(54)    **Device for simulating MIMO environment**

(57)    The invention relates to a device which comprises a plurality of input ports for accepting corresponding input RF signals corresponding to a plurality of transmitting antenna elements and a plurality of output ports for generating coherent output signals to a corresponding plurality of receiving antenna elements, whereby the output ports and the input ports are interconnected by a module comprising a network of interconnected hybrid elements.

According to the invention, said module further comprises at least one attenuator being connected to at least one input and or output of at least one of hybrid element of said network of hybrid elements.

Figure 3

**Description**

**1. Domain of the invention**

The present invention relates to a testing (calibration and/or screening) component for a wireless device under test (DUT) by an automatic test device (ATE).

More precisely, the present invention relates to the test of wireless mobile terminals that must be able to operate in complex wireless communication environment. One difficulty of wireless radio communication, compared to wired communication, is the environment which creates signal multipath with different qualities of signals (fading, phase shifting, delay, Doppler Effect...)

Nowadays, radio communication terminals are able to take advantage of this environment, by using complex encoding/decoding algorithms, such as spatial multiplexing, space and time diversity.

However, for achieving the test of a wireless mobile terminal (simply called terminal or device under test in the following), it is necessary to reproduce this complex environment in testing conditions. Such reproductions are not easy. Indeed, to be able to characterize the quality of radio signal processing, the chaotic over-the-air environment has to be replicated in cabled environment, where parameters can be controlled accurately.

This is why, usually, the device under test (DUT) and the automatic test device (ATE) are "cabled". This term is used for indicating that the device's antennas are linked. For example, in the case of a MIMO environment (several antennas on the device under test and several antennas on the automatic testing device), the antennas are physically linked in order to allows defining a complex environment for signal transmission between the automatic test device (ATE) and the device under test (DUT).

Indeed, it is also necessary to reproduce complex signals transmissions paths. For example, in a MIMO environment, when the device under test has two antennas and the automatic testing device has also two antennas, cables are used for linking the antennas: a first cable is used to link the first antenna of the ATE with the first antenna of the DUT, a second cable is used to link the first antenna of the ATE with the second antenna of the DUT, a third cable is used to link the second antenna of the ATE with the first antenna of the DUT and finally a fourth cable is used to link the second antenna of the ATE with the second antenna of the DUT.

But linking the various antennas of the device is the easiest part of the simulation of the complex wireless environment. It is then necessary to reproduce the complex wireless transmissions paths in the cabled environment.

An object of the present invention is to create multiple transmission paths in the previously described cabled environment, with the possibility to play on two parameters, namely fading and phase shift.

**2. Prior Art Solutions**

Solutions exist for emulating wireless channel in complex environment.

Emulator with analogue to digital conversion

One option to emulate wireless channel is to use a powerful radio channel emulator which converts the analogue signal to digital data, then software can apply all sort of mathematical formulas to simulate the desired environment, and then converts back again digital signal to analogue. (See specialized devices from Azimuth™, Spirent™, Elektrobit™ ...)

These devices are the more versatile, and are able to imitate real wireless conditions. But they have three main problems:

- the processing time introduces a delay in the signal, to be able to give a result in real time, the device need high speed processors;

- the conversion from analogue to digital introduces a quantization effect due to the accuracy limit of the analog to digital converter. The device needs high quality converters;

- the sampling frequency introduces an error which means that the device may need to interpolate the samples, and for high frequencies it needs high speed sampling. The device needs high speed converters.

For these three reasons this kind of device is very expensive.

Emulator with only analogue path

This kind of device has the same goal as the previous one, it intends to create a multipath environment which can be able to imitate wireless environment. It is a bit more limited compared to analog/digital emulator but is still very powerful.

This kind of device contains many complex and expensive modules (phase shifters, combiners, fading delay lines, fading emulator...). Thus this kind of device is also very expensive.

Butler Matrix

The well-known butler matrix is simpler: it creates diversity with fixed phase shifters, and modifies each signal path with variable phase shifters. It is used to create diversity and minimize signal loss (fading). This kind of device does intend to imitate wireless environment, it used to create diversity, like for beam forming applications.
The problem is that the butler matrix has the following limitations:

- it only plays with the phase;

- variable phase shifter are usually expensive and are applicable in a narrow frequency range.

Thus, there is a need for providing a new automatic test device (or a new module which can be inserted in an automatic test device) for challenging the signal processing quality of wireless devices under test.

## 3. Description of the Invention

The invention does not comprise these drawbacks of the prior art techniques. Indeed, the invention relates to a device comprising a plurality of input ports for accepting corresponding input RF signals corresponding to a plurality of transmitting antenna elements and a plurality of output ports for generating coherent output signals to a corresponding plurality of receiving antenna elements, whereby the output ports and the input ports are interconnected by a module comprising a network of interconnected hybrid elements.
According to the invention, said module further comprises at least one attenuator being connected to at least one input and/or to at least one output of at least one of hybrid element of said network of hybrid elements.
Thus, the invention allows simulating a MIMO environment, with phase shifting and coupling without having the necessity to build an expensive component. Thus, the module of the invention is able to challenge the signal processing quality of wireless devices. However, it does not intend to replicate the full complexity of an over-the-air environment. Thus, the invention is simpler and cheaper than the existing devices.
According to an embodiment, that said module comprises a number of attenuator at least equal to the number of hybrid elements.
According to an embodiment the plurality of input ports are 4 in number.
According to an embodiment, the plurality of output ports is 4 in number.
According to an embodiment, said module further comprises a plurality of phase shifter elements.
According to an embodiment, at least one of the plurality of phase shifter elements delay a phase of signals passing there through by 45.degree.

## 4. List of the figures

The proposed method, system, device, test signal and computer program product are described in the following by way of examples in connection with the accompanying figures without limiting the scope of the protection as defined by the claim. The figures show:

- figure 1 is an illustration of a MIMO testing configuration when no cable is used;

- figure 2 is an illustration of a MIMO testing configuration when cables are used for linking the antennas of figure 1;

- figure 3 is an illustration of an exemplary embodiment of the network of hybrids elements coupled with attenuators according to the invention in a 4×4 MIMO system;

- figure 4 is an illustration of an exemplary embodiment of the network of hybrids elements coupled with attenuators according to the invention in a 2×2 MIMO system;

- figure 5 is an illustration of an exemplary embodiment of the network of hybrids elements coupled with attenuators according to the invention in a 8×8 MIMO system.

**5. Description of a specific embodiment**

5.1 <u>General principle of the invention</u>

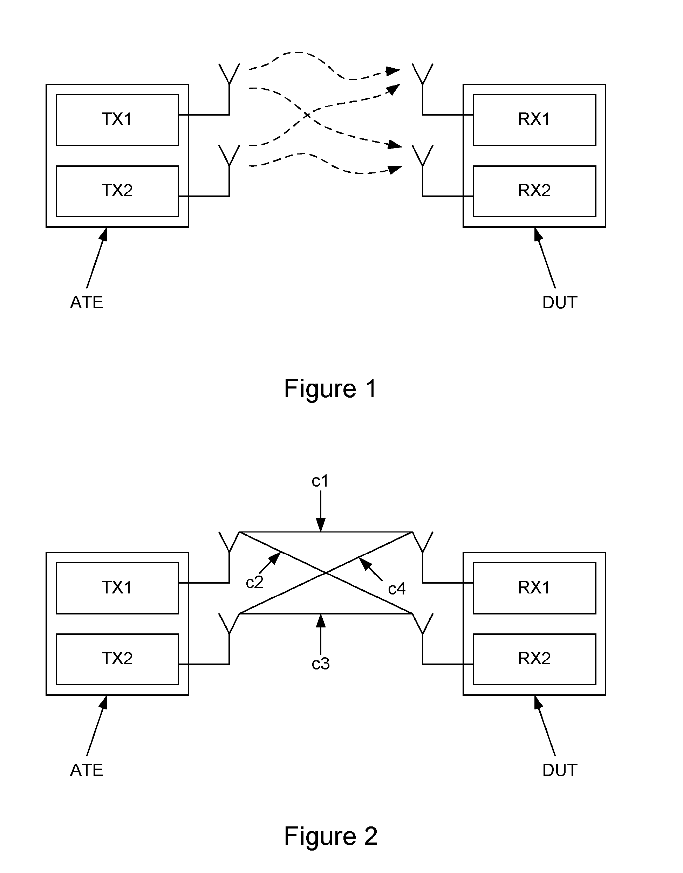

Figure 1 is an illustration of a MIMO testing configuration when no cable is used. In this figure, an automatic test device (ATE) is represented, with two transmitters (TX1, TX2), each having one transmission antenna. Identically, a device under test (DUT) is represented, with two receivers (RX1, RX2), each having one transmission antenna. In this common situation, signal is wireless transmitted and represented by the dotted lines: a signal emitted by the antenna of the transmitter TX1 is receiver both by antenna of the receiver RX1 en the antenna of the receiver RX2. This is the same for the signal emitted by the antenna of the transmitter TX2.

Figure 2 is an illustration of a MIMO testing configuration when cables are used for linking the antennas of the configuration of figure 1. This is a more efficient testing configuration. This example comprise four cables (cl,..c4), each cable links one antenna of the automatic test device to an antenna of the device under test.

In this configuration, the signal is not transmitted thru the air, but it is transmitted thru cable. However, it is necessary to control the transmitted signals, as previously explained, and to buy some expensive devices for doing so. The examples above are for illustration only. The examples have the single objective of introducing the problematic of MIMO environment.
A multipath MIMO environment, where N inputs antennas can receive the signal coming from N outputs antennas, is formalized by a square matrix of order N.

$$A = \begin{bmatrix} a_{1,1} & a_{1,2} & \dots & a_{1,n} \\ a_{2,1} & a_{2,2} & \dots & a_{2,n} \\ \vdots & \vdots & \ddots & \vdots \\ a_{n,1} & a_{n,2} & \dots & a_{n,n} \end{bmatrix}$$

Several operations can be done on matrices such as calculation of Eigen vectors, quadratic equation, polynomial characteristics... Among the various characteristics of the matrix, the determinant and the condition number are two important values which are often used. In signal processing, the quality of a matrix can be represented by these two values:

- the determinant shall be non zero, and large.

- the condition number shall be small.

<u>Problem description</u>

In wireless environment, each input antenna can receive the signal from all output antennas (see figure 1 and figure 2). The transmission path is illustrated by a matrix as explained below. The problem with a testing configuration, like the one of figure 2, is to reproduce this matrix with wires to be able to control each signal path.
But one cannot simply connect all inputs with all outputs, because the matrix with all coefficient set to 1 is not invertible, this mean that it won't be possible for the signal processing to decode data from the signal. Thus, the one skilled in the Art is faced to at least two problems:

- Problem #1: how to create differences between signal paths so that signal processing of the device under test is able to decode data. This means to have a matrix determinant which is not equal to 0 (Multipath).

- Problem #2: how to create variation in each path to be able to challenge the signal processing in different conditions. This means to be able to change determinant and condition number values.

Description of the principle of the invention

For solving the above mentioned problems, the invention reuses the simplicity of the Butler matrix, but has one major change. Problem #1 is solved quite in the same way as for a Butler Matrix (i.e. it uses static phase shifter to create diversity, like hybrid coupler). For problem #2, the invention uses attenuators to modify the paths inside the matrix. It is the opposite perspective of a Butler matrix which uses phase shifter in order to keep the fading as low as possible.

The invention is a combination of two electrical components (hybrid couplers and attenuators) which creates multipath for a multi-input and multi-output (MIMO) system.

- The hybrid couplers characterize the multipath diversity, when the system is built (i.e. the phase shift is fixed by construction of the module of the invention).

- The attenuators modify the property of the system matrix when it is in use (i.e. the fading can be moved during the use of the module according to the invention).

Consequently, the module of the invention is simple to build (the connection between hybrid couplers, or between hybrid coupler and attenuator, or between attenuators is made with electrical connectors or electrical cables) and does not necessitate expensive components.

Furthermore, the module of the invention allows obtaining testing results which are closed of the testing results which would be obtained with more expensive equipment.

In a first embodiment of the invention, the static phase shifter which is used is a hybrid coupler. A 3 dB, 90° hybrid coupler is a four-port device that is used either to equally split an input signal with a resultant 90° phase shift between output ports or to combine two signals while maintaining high isolation between the ports. One special aspect of the invention is to use the hybrid coupler as a quadrature hybrid for simulating multipath diversity.

The matrix given by a hybrid coupler used as a quadrature hybrids is $\begin{pmatrix} 1 & i \\ i & 1 \end{pmatrix}$ with determinant = 2, condition number = 2.

Where i represent the imaginary number and represent the rotation of 90°. And 1 the signal without rotation (0°).

This is already an "ideal" 2x2 matrix (easy to decode for a signal processor). The hybrid coupler is the element which simulates multipath in the invention. By interconnecting several hybrid couplers it is possible to create multipath for bigger matrices. By going through several hybrid couplers, the signal may experience a rotation of 90° each time. This means that all the possible rotations are already known: 0°, 90°, 180° or 270° (matrix coefficients 1, i, -1 and -i).

When the matrix is built, the way how hybrid couplers are connected will characterize the multipath of the system. (Where which outputs the signal are driven). Thus, the invention implements a network of hybrids elements which are arranged for simulating a MIMO wireless environment in a cabled environment (i.e. the antennas of the ATE and the DUT are interconnected). The resulting device according to the invention comprise a plurality of input ports for accepting corresponding input RF signals corresponding to the plurality of transmitting antenna elements from the ATE and a plurality of output ports for generating coherent output signals to the corresponding plurality of receiving antenna elements of the DUT, whereby the output ports and the input ports are interconnected by a module comprising a network of interconnected hybrid elements (which are for example Hybrids couplers).

In other embodiment of the invention, the module further comprises a plurality of phase shifter elements. These elements (which can be two or four in number), can add a complementary phase shifting feature to the module. The phase shifter elements delay a phase of signals passing there through by 45.degree, in order to produce a different MIMO environment.

The attenuator preferably controlled and variable are used as signal fader, and the variations of the values of the attenuations are controlled by the tester to modify matrix properties of the system during the test (i.e. in use) .The attenuators are used to fade none or several paths. In the matrix, the coefficient of a attenuator is represented by real number between [0,1], with 1 meaning no fading, and 0 an infinite fading.

The connection between hybrid couplers, or between hybrid coupler and attenuator, or between attenuators is made with electrical connectors or electrical cables.

The present invention can be in the form of NxN square matrix (N inputs, N outputs) and can use as many attenuators and hybrid coupler as needed.

Attenuators and couplers are bidirectional, so the invention is also bidirectional, inputs and outputs are reversed for uplink or downlink transmission. However, it can also be used for unidirectional purpose.

Example of three embodiments

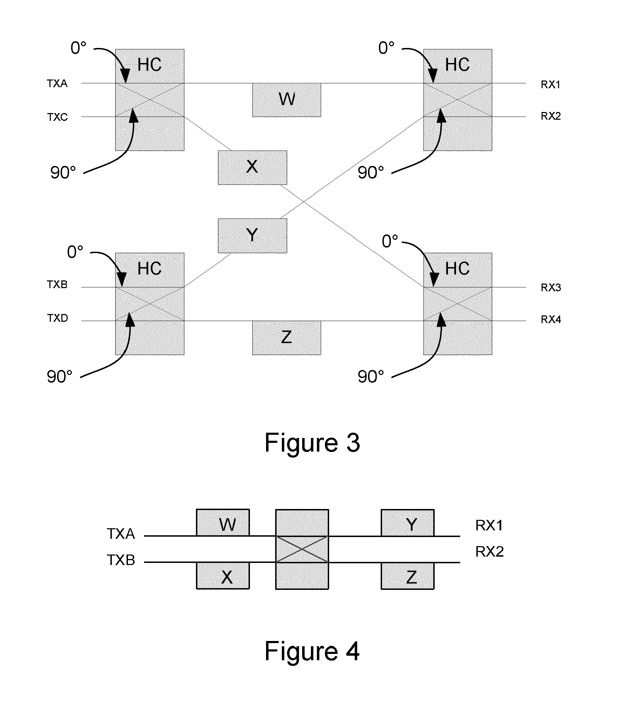

One possible form of this system is the following 4x4 matrix (Figure 3) in which Hybrid couplers are noted HC, inside HC blocks, straight line have a 0° phase shift (matrix coefficient = 1), and diagonal lines have a 90° shift (matrix coefficient = i). W, X, Y and Z are attenuators, their matrix coefficient is always real, and included between [0,1]. In this embodiment, one has a simulation of a $4\times4$ MIMO system (four transmission antennas and four reception antennas). Thus, in this embodiment, we will have a $4\times4$ simulation matrix.

Thus, in the network represented in figure 3, as an example, the signal which is received at antenna RX1 corresponds to the sum of the following signals: signal coming from TXA, without shift, signal coming from TXC with a shift of 90° ($\pi$/2), signal coming from TXB with a shift of 90° ($\pi$/2) and signal coming from TXD with a shift of 180° ($\pi$). The same principle is applied for other signals received in other antennas. Additionally, each rotated signal is pondered by a value defined in an attenuator. In the previous example, the signal coming from TXA is pondered by coefficient W and the signal coming from TXB is pondered by coefficient Y.

Thus the $4\times4$ predefined matrix of the network represented in figure 3 is:

$$\begin{pmatrix} w & iy & iw & -y \\ iw & y & -w & iy \\ ix & -z & x & iz \\ -x & iz & ix & z \end{pmatrix}$$

The determinant of this example matrix is always known and has the value 16wxyz. Thus, with the network of the invention, it is easy to determine preconditions for which the device under test is tested.

In figure 4, a network is disclosed, adapted for a $2\times2$ MIMO system (two transmission antennas and two reception antennas). Thus, in this embodiment, we will have a $2\times2$ simulation matrix. In this embodiment, the signal which is received at antenna RX1 corresponds to the sum of the following signals: signal coming from TXA, without shift, faded with coefficient of WY, signal coming from TXB with a shift of 90° ($\pi$/2), faded with coefficient of XY. The signal which is received at antenna RX2 corresponds to the sum of the following signals: signal coming from TXB, without shift, faded with coefficient of XZ, signal coming from TXA with a shift of 90° ($\pi$/2), faded with a coefficient of WZ.

Thus the 2x2 predefined matrix of the network represented in figure 4 is:

$$\begin{pmatrix} wy & ixy \\ iwz & xz \end{pmatrix}$$

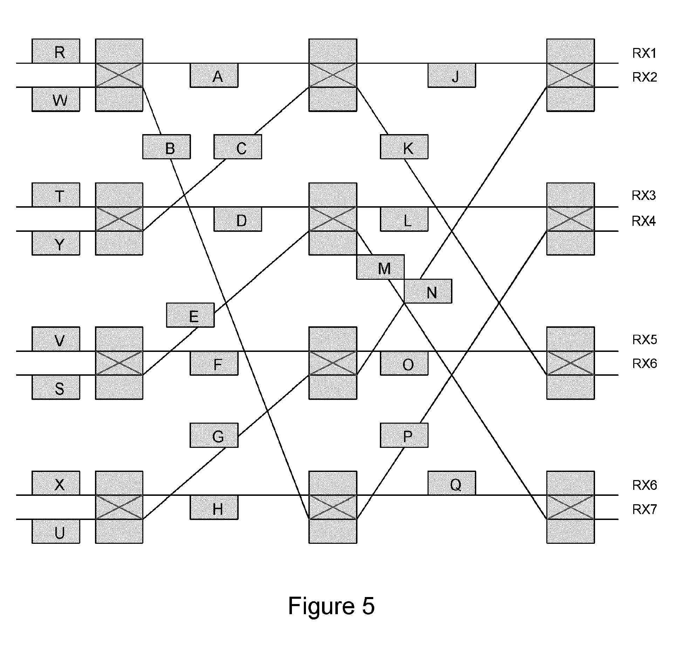

In figure 5, a network is disclosed, adapted for an $8\times8$ MIMO system (eight transmission antennas and eight reception antennas).

Thus, in the network represented in figure 5, as an example, the signal which is received at antenna RX1 corresponds to the sum of the following signals: signal coming from TXA, without shift, signal coming from TXH with a shift of 90° ($\pi$/2), signal coming from TXE with a shift of 180° ($\pi$) and signal coming from TXB with a shift of 270° (3$\pi$/2), etc. The same principle is applied for other signals received in other antennas.

Thus the $8\times8$ predefined matrix of the network represented in figure 5 is:

$$\begin{pmatrix} raj & -isfn & -tcj & iugn & -vfn & iwaj & -xgn & iycj \\ iraj & -sfn & itcj & -ugn & ivfn & -waj & -ixgn & ycj \\ -rbp & isel & -tdl & iuhp & -vel & iwbp & xhp & -iydl \\ irbp & -sel & itdl & -uhp & -ivel & wbp & ixhp & -ydl \\ -rak & isfo & -tck & iugo & vfo & -iwak & -xgo & iyck \\ irak & -sfo & -itck & ugo & ivfo & -wak & ixgo & -yck \\ -rbq & isem & tdm & -iuhq & -vem & iwbq & -xhq & iydm \\ -irbq & sem & itdm & -uhq & ivem & -wbq & ixhq & -ydm \end{pmatrix}$$

In this third embodiment, an interesting feature is the presence in the network, of a second layer of hybrid couplers for merging the signal. This second layer is coupled with a second layer of attenuators. Both these two new layers allow defining a more accurate system in term of mixing and attenuation. The second layer of hybrid coupler is called an interconnection layer and allows mixing the signals coming from the input antennas in a most complex arrangement. Thus this $8\times8$ can even be used in case of testing some $4\times4$ or $2\times2$ MIMO system (see Case 3: downsized matrix for an example of using a biggest matrix for testing a system with a lower number of antennas).

Main Advantages

The invention creates a controllable channel matrix for testing purpose, with only hybrid couplers and attenuators. The advantages are:

- It is easy to implement;

- It is low cost compared to other systems, because it uses simple components;

- It can use a wide RF range for example from 2GHz to 4GHz (depends on hybrid coupler range);

- It can be used in bidirectional or unidirectional transmissions;

- Evaluation of the system difficulty for signal processing can easily be done by looking at the determinant and the condition number of the matrix.

It can have several applications:

- Check the behavior of the device under test with an optimal multipath matrix;

- Performance characterization:

    ○ Signal measurement accuracy (RSSI, SINR, sounding ...);

    ○ Throughput testing;

    ○ Threshold between the use of transmit diversity and spatial multiplexing;

    ○ Benefit of beamforming;

    ○ Performance comparison between 2 units.

- In can be used to associate the signal from different sources:

    ○ With an interferer;

    ○ With other units for handover, bandwidth sharing...

5.2 Cases of utilization

5.2.1 Case 1: optimal performance

It can be interesting to have an optimal matrix to show the best performance of the device under test. (Best SINR, best throughput ...). The optimal performance is reached when recombination of each signal on each antenna is optimal. As stated above, the optimal condition is reached when the determinant is large and the condition number is small.
In the case of the 4x4 matrix described in Fig 1, optimal performance is shown when there is no fading (w, x, y, z = 1).

$$\mathrm{Matrix} \begin{pmatrix} 1 & i & i & -1 \\ i & 1 & -1 & i \\ i & -1 & 1 & i \\ -1 & i & i & 1 \end{pmatrix}$$

Determinant = 16, Condition number = 4

5.2.2 <u>Case 2: signal processing performance characterization</u>

By modifying the behavior of one or several attenuators it is possible to change paths and balance the signals on each output. By evaluation of the behavior of the device under test in degraded conditions, it is possible to characterize the quality of its signal processing. It is possible to define the degradation by looking at the decrease of the determinant, and the increase of the condition number.

Possible field of characterizations of the device under test:

- Signal measurement (RSSI, SINR, sounding ...);
- Throughput;
- Threshold between the use of transmit diversity and spatial multiplexing;
- Benefit of beamforming;
- Performance comparison between 2 units.

Some examples, according to Fig 1, which show the evolution of the determinant and the condition number:

**Example with w=1 x=½ y=½ z=1**

$$\mathrm{matrix} \begin{pmatrix} 1 & \frac{i}{2} & i & -\frac{1}{2} \\ i & \frac{1}{2} & -1 & \frac{i}{2} \\ \frac{i}{2} & -1 & \frac{1}{2} & i \\ -\frac{1}{2} & i & \frac{i}{2} & 1 \end{pmatrix} \mathrm{Determinant} = 4, \mathrm{Condition\ number} = 4.5$$

**Example with w=½ x=1 y=½ z=1**

$$\mathrm{matrix} \begin{pmatrix} \frac{1}{2} & \frac{i}{2} & \frac{i}{2} & -\frac{1}{2} \\ \frac{i}{2} & \frac{1}{2} & -\frac{1}{2} & \frac{i}{2} \\ i & -1 & 1 & i \\ -1 & i & i & 1 \end{pmatrix} \mathrm{Determinant} = 4, \mathrm{Condition\ number} = 6$$

**Example with w=½ x=½ y=½ z=1**

$$\text{matrix} \begin{pmatrix} \frac{1}{2} & \frac{i}{2} & \frac{i}{2} & -\frac{1}{2} \\ \frac{i}{2} & \frac{1}{2} & -\frac{1}{2} & \frac{i}{2} \\ \frac{i}{2} & -1 & \frac{1}{2} & i \\ -\frac{1}{2} & i & \frac{i}{2} & 1 \end{pmatrix} \text{Determinant} = 2.5, \text{ Condition number} = 6$$

**Example with w=1 x=¼ y=¼ z=1**

$$\text{matrix} \begin{pmatrix} 1 & \frac{i}{4} & i & -\frac{1}{4} \\ i & \frac{1}{4} & -1 & \frac{i}{4} \\ \frac{i}{4} & -1 & \frac{1}{4} & i \\ -\frac{1}{4} & i & \frac{i}{4} & 1 \end{pmatrix} \text{Determinant} = 2.5, \text{ Condition number} = 6.25$$

**Example with w=1 x=1/8 y=1/8 z=1**

$$\text{matrix} \begin{pmatrix} 1 & \frac{i}{8} & i & -\frac{1}{8} \\ i & \frac{1}{8} & -1 & \frac{i}{8} \\ \frac{i}{8} & -1 & \frac{1}{8} & i \\ -\frac{1}{8} & i & \frac{i}{8} & 1 \end{pmatrix} \text{Determinant} = 0.25, \text{ Condition number} = 10.125$$

5.2.3 <u>Case 3: downsized matrix</u>

The number of inputs and outputs can be downsized. In this case, it means that the device under test does not use all inputs and outputs of the matrix. The remaining inputs/outputs can be blocked by external termination or used for other test purpose (interferer, handover, bandwidth sharing with another unit ...).

**Example of a 4x4 matrix (Fig 1) reduced to a 2x2 matrix.**

If only TXA, TXB, RX1 and RX2 are used

$$\text{Matrix} \begin{pmatrix} w & i\,y \\ i\,w & y \end{pmatrix} \text{determinant} = 2wy$$

**Example of a 4x4 matrix (Fig 1) reduced to a 4x2 matrix**

TXA, TXB, TXC, TXD, RX1 and RX2 are used.
TXC = TXA, TXD = TXB

$$\text{Matrix} \begin{pmatrix} w + i\,w & i\,y - y \\ i\,w - w & y + i\,y \end{pmatrix} \text{Determinant} = 4iwy$$

5.3. <u>Various features</u>

The present invention can be implemented in digital electronic circuitry, or in computer hardware, firmware, software, or in combination thereof. Apparatus of the invention can be implemented in a computer program product tangibly embodied in a machine-readable storage device for execution by a programmable processor; and methods actions can be performed by a programmable processor executing a program of instructions to perform functions of the invention by operating on input data and generating output. The invention can be implemented advantageously in one or more computer programs that are executable on a programmable system including at least one input device, and at least one output device. Each computer program can be implemented in a high-level procedural or object oriented programming language, or in assembly or machine language if desired; and in any case, the language can be a compiled or interpreted language.

Suitable processors include, by way of example, both general and specific microprocessors. Generally, a processor will receive instructions and data from a read-only memory and/or a random access memory. Generally, a computer will include one or more mass storage devices for storing data files; such devices include magnetic disks, such as internal hard disks and removable disks; magneto-optical disks; and optical disks. Storage devices suitable for tangibly embodying computer program instructions and data include all forms of volatile and non-volatile memory, including by way of example semiconductor memory devices, such as EPROM, EEPROM, and flash memory devices; magnetic disks such as internal hard disks and removable disks; magneto-optical disks; CD-ROM disks; and buffer circuits such as latches and/or flip flops. Any of the foregoing can be supplemented by, or incorporated in ASICs (application-specific integrated circuits), FPGAs (field-programmable gate arrays) or DSPs (digital signal processors).

**Claims**

1.   Device comprising a plurality of input ports for accepting corresponding input RF signals corresponding to a plurality of transmitting antenna elements and a plurality of output ports for generating coherent output signals to a corresponding plurality of receiving antenna elements, whereby the output ports and the input ports are interconnected by a module comprising a network of interconnected hybrid elements, **characterized in that** said module further comprises at least one attenuator being connected to at least one input and/or at least one output of at least one of hybrid element of said network of hybrid elements.

2.   Device according to claim 1, **characterized in that** said module comprises a number of attenuator at least equal to the number of hybrid elements.

3.   Device according to claim 1, **characterized in that** said network comprises at least one interconnection layer of hybrid element.

4.   Device according to claim 1, **characterized in that** the plurality of input ports are 4 in number.

5.   Device according to claim 1, **characterized in that** the plurality of output ports are 4 in number.

6.   Device according to claim 1, **characterized in that** said module further comprises a plurality of phase shifter elements.

7.   Device according to claim 6, **characterized in that** at least one of the plurality of phase shifter elements delay a phase of signals passing there through by 45.degrees.

**Amended claims in accordance with Rule 137(2) EPC.**

1. Device comprising a plurality of input ports for accepting corresponding input RF signals corresponding to a plurality of transmitting antenna elements and a plurality of output ports for generating coherent output signals to a corresponding plurality of receiving antenna elements, **characterized in that** the output ports and the input ports arc interconnected by a module comprising a network of at least two interconnected hybrid couplers,

and **characterized in that** said module further comprises at least two attenuators each being connected to one input or one output of at least one of hybrid coupler of said network of hybrid couplers.

**2.** Device according to claim 1, **characterized in that** said module comprises a number of attenuator at least equal to the number of hybrid couplers.

**3.** Device according to claim 1, **characterized in that** said network comprises at least one interconnection layer of hybrid coupler.

**4.** Device according to claim 1, **characterized in that** the plurality of input ports are 4 in number.

**5.** Device according to claim 1, **characterized in that** the plurality of output ports are 4 in number.

**6.** Device according to claim 1, **characterized in that** said module further comprises a plurality of phase shifter elements.

**7.** Device according to claim 6, **characterized in that** at least one of the plurality of phase shifter elements delay a phase of signals passing there through by 45.degrees.

Figure 1

Figure 2

Figure 3

Figure 4

Figure 5

**EP 2 597 794 A1**

Europäisches
Patentamt

European
Patent Office

Office européen
des brevets

## EUROPEAN SEARCH REPORT

Application Number

EP 11 30 6544

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2010/059103 A1 (ERICSSON TELEFON AB L M [SE]; ASPLUND HENRIK [SE]; LUNDSTROEM ANDERS []) 27 May 2010 (2010-05-27)<br>* figure 3 *<br>* page 8, line 19 - page 9, line 5 *<br>* figures 4b,8 *<br>* page 9, line 28 - page 10, line 11 *<br>* page 10, line 29 - page 11, line 24 *<br>----- | 1-3 | INV.<br>H04B17/00<br>H04B7/04 |
| X | US 2008/151763 A1 (LEE SUNG-JUN [KR] ET AL) 26 June 2008 (2008-06-26)<br>* figures 1-3 *<br>* paragraph [0030] - paragraph [0047] *<br>----- | 1,4-7 | |

| | TECHNICAL FIELDS SEARCHED (IPC) |
|---|---|
| | H04B |

The present search report has been drawn up for all claims

| Place of search | Date of completion of the search | Examiner |
|---|---|---|
| Berlin | 24 April 2012 | Chave, Julien |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.............................................................................................

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 11 30 6544

This annex lists the patent family members relating to the patent documents cited in the above-mentioned European search report.
The members are as contained in the European Patent Office EDP file on
The European Patent Office is in no way liable for these particulars which are merely given for the purpose of information.

24-04-2012

| Patent document cited in search report | Publication date | Patent family member(s) | | Publication date |
|---|---|---|---|---|
| WO 2010059103 A1 | 27-05-2010 | EP | 2351409 A1 | 03-08-2011 |
| | | EP | 2353319 A1 | 10-08-2011 |
| | | US | 2011230143 A1 | 22-09-2011 |
| | | US | 2011263215 A1 | 27-10-2011 |
| | | WO | 2010059103 A1 | 27-05-2010 |
| | | WO | 2010059104 A1 | 27-05-2010 |
| US 2008151763 A1 | 26-06-2008 | NONE | | |

EPO FORM P0459

For more details about this annex : see Official Journal of the European Patent Office, No. 12/82